# EUROPÄISCHE PATENTANMELDUNG

(11) **EP 2 441 737 A2**
(43) Veröffentlichungstag der Anmeldung: **18.04.2012**
(21) Anmeldenummer: 11178281.9
(22) Anmeldetag: 22.08.2011
(51) Int. Cl.: C04B 14/06, C04B 14/28, C04B 26/00

(54) **Putz mit Pflanzenmehl**

(30) Priorität: 13.10.2010 DE 202010014265 U
(71) Anmelder: Quarzsandwerk Lang GmbH & Co. KG, 74417 Gschwend (DE)
(72) Erfinder: Link, Markus, 74544 Michelbach/Bilz (DE); Lang, Rüdiger, 74417 Gschwend (DE)
(74) Vertreter: Charrier, Rapp & Liebau

(57) **Zusammenfassung**

Die Erfindung betrifft einen Putz bzw. Mörtel, beinhaltend mindestens eine Komponente eines Steinmehls sowie ein aus Bestandteilen der Pflanze Physillium hergestelltes Pflanzenmehl. Bekannte derartige Putze verwenden das Physillium lediglich als Viskositätsmodifikator und eignen sich nicht für den Innenbereich.

Die Aufgabe, einen Putz beziehungsweise Mörtel für den Innenbereich darzustellen, der nicht vollständig aushärtet, sondern bei Zugabe von Wasser wieder in einen teilweise plastischen Zustand überführt wird, wird dadurch gelöst, dass es sich bei dem Steinmehl um luftgetrocknetes Steinmehl handelt und das Pulver aus der Pflanze Physillium das Bindemittel für den Putz bildet.

## Beschreibung

Die Erfindung betrifft einen Putz bzw. einen Mörtel nach dem Oberbegriff des Anspruchs 1.

Putze bzw. Mörtel mit pflanzlichen Komponenten sind aus dem Stand der Technik bekannt. So beschreibt die DE 696 07 376 T2 ein Verfahren zur verbesserten rheologischen Steuerung bei Zementsystemen in Gestalt einer zementartigen Formulierung, die ein zementartiges System, ein mikrobielles Polysacharid und einen Viskositätsmodifikator enthält. Das zementartige System betrifft Materialien, welche, wenn sie mit einem wässrigen Medium gemischt werden, abbinden oder ein haftendes oder kohäsives Verhalten zeigen. Das mikrobielle Polysacharid weist die charakteristischen Merkmale des Heteropolysacharids S-657 auf, welches unter anderem als Additiv in Wandvergußmassen, wasserdurchlässigen Zementpasten und Mörteln verwendet wird, wie sie auch in der US 5,175,278 beschrieben sind. Insbesondere werden als möglicher Viskositätsmodifikator Samengummis der Physillium- oder Psylliumpflanze beschrieben.

Bei den genannten Druckschriften wirkt das Physillium lediglich als Viskositätsmodifikator. Das Bindemittel selbst sind die gebrannten Gesteinsmehle, also das zementartige System. Ein einmal ausgehärteter Putz oder Mörtel bleibt somit für immer hart und kann nicht durch Zugabe von Wasser wieder erweicht werden. Auch eignen sich die beschriebenen Zusammensetzungen nicht für den Innenbereich.

Es besteht somit die Aufgabe, einen Putz bzw. Mörtel für den Innenbereich darzustellen, der nicht vollständig aushärtet, sondern bei Zugabe von Wasser nach der Austrocknung wieder in einen teilweise plastischen Zustand überführt wird.

Gelöst wird diese Aufgabe mit den kennzeichnenden Merkmalen des Anspruchs 1. Vorteilhafte Ausgestaltungen sind den Unteransprüchen entnehmbar.

Erfindungsgemäß ist vorgesehen, dass anstelle eines gebrannten Steinmehls lediglich ein luftgetrocknetes Steinmehl verwendet wird. Dieses luftgetrocknete Steinmehl kann beispielsweise getrocknetes Kalbsteinmehl oder getrockneter hydroglasierter Quarzsand sein. Bekanntermaßen eignet sich ein lediglich getrocknetes Steinmehl nicht als Bindemittel. Hierfür muss das Steinmehl gebrannt sein, also einen Zement darstellen.

Es hat sich überraschenderweise herausgestellt, dass durch Zugabe eines aus der Pflanze Physillium hergestellten Pulvers ein Putz bzw. Mörtel auch mit einem lediglich getrockneten Steinmehl möglich ist. Dies wird dadurch ermöglicht, dass in diesem Falle das Pulver aus der Pflanze Physillium selbst als Bindemittel wirkt und somit ein Zement im klassischen Sinne nicht mehr nötig ist.

Das luftgetrocknete Steinmehl kann dabei aus verschiedenen Chargen bestehen, welche verschiedene Materialeigenschaften und Körnungen aufweisen können. So kann das luftgetrocknete Steinmehl Kalksteinmehl mit einer Körnung zwischen 0,01 und 1,20 mm sowie Quarzsand mit einer Körnung zwischen 0,10 und 0,80 mm umfassen.

Das Pulver aus der Pflanze Physillium kann aus verschiedenen Teilen der Pflanze hergestellt sein, zum Beispiel aus den Spelzen, so dass sich ein Spelzenmehl mit einer Reinheit von 95 % und einem Ausmahlgrad von 80 Saiten pro Quadratinch ergibt. Das Pulver kann auch Spelzen-Kornmehl mit einer Reinheit von 98 % und einem Ausmahlgrad von 80 Saiten pro Quadratinch umfassen.

Vorteilhafterweise wird dem Putz, vor allem wenn er länger gelagert werden soll, ein Konservierungsmittel wie Natriumchlorid oder Natriumbenzoat in üblicher Dosierung beigegeben zum Beispiel 2 g Natriumbenzoat pro Kilogramm der mineralischen Mischung.

In einer bevorzugten Ausführungsform werden folgende Komponenten gemischt:

| | | | |
|---|---|---|---|
| • | Weisjura-Kalksteinmehl getrocknet | 0,90 - 0,09 mm | 300 g /kg |
| • | Weisjura-Kalksteinkörnung getrocknet | 0,09 - 0,71 mm | 270 g/kg |
| • | Weisjura-Kalksteinkörnung getrocknet | 0,71 - 1,20 mm | 240 g/kg |
| • | Hydroglasierter Quarzsand getrocknet | 0,10 - 0,50 mm | 100 g/kg |
| • | Hydroglasierter Quarzsand getrocknet | 0,20 - 0,80 mm | 90 g/kg. |

Diese fünf mineralischen Grundsubstanzen werden zunächst in einem Vorbehälter exakt abgewogen und eingefüllt. Nach erfolgter Abfüllung werden in einem separaten Behälter zusätzlich folgende Stoffe abgewogen und eingefüllt:
- Physillium-Huskpowder 93, nämlich Spelzenmehl mit einer Reinheit von 95 % und einem Ausmahlgrad von 80 Saiten pro Quadratinch in einer Menge von 10 g/kg mineralischer Mischung;
- Physillium-Siedpowder 98, nämlich Spelzen-Kornmehl mit einer Reinheit von 98 % und einem Ausmahlgrad von 80 Saiten pro Quadratinch in einer Menge von 4 g/kg mineralischer Mischung;
- Natriumbenzoat als Konservierungsmittel in einer Menge von 2 g/kg mineralischer Mischung.

Mit einer mechanischen Austragsvorrichtung werden aus beiden Behältern die Inhaltsstoffe entzogen und dabei in einem gemeinsamen Volumenstrom gleichmäßig vermengt. In einem Freifallmischer werden daraufhin sämtliche Inhaltsstoffe über einen Zeitraum von 20 Minuten gemischt. Zwangsmischer sind weniger geeignet, da sie bei Trockensubstanzen eine Kornzertrümmerung bewirken und hier durch das Mischungsverhältnis ändern. Der bei dem Mischvorgang entstehende Staub wird abgesaugt und über einen Filter der Mischung wieder zugeführt, da der geringe Anteil an Physillium sich sehr schnell verflüchtigt und das spätere Bindeverhalten verschlechtert. Nach erfolgter Mischung wird das Fertigprodukt in wasserfeste Säcke verpackt, da die Mischung hykroskopisch ist.

Die Vermahlung sowie Absiebung des Physillium auf 80 Mesh ist für die Quellfähigkeit sowie die notwendige große Oberfläche, um jedes mineralische Partikel zu erreichen und zu umhüllen, notwendig. Die Reinheit des Physillium-Huskpowder 93 ist vorteilhaft, da hier eine wesentliche höhere Bindekraft entsteht und das Risiko der Schimmelbildung minimiert wird. Ferner ist das verwendete Physilliumpulver sehr hell und verändert nicht die Farben der mineralischen Rohstoffe. Das weiter verwendete Physillium-Siedpowder enthält einen sehr hohen Anteil an Leinöl, welches im Pulver eingelagert ist. Dieses Öl erhöht die Wasserbeständigkeit, welche den fertigen Putz in feuchten Räumen weniger anfällig gegen Auflösung der Struktur macht.

Der so erzeugte Putz besteht aus natürlichen Mineralien und pflanzlichen Rohstoffen und ist somit biologisch optimal verträglich. Das als Bindemittel verwendete Pulver aus Physillium verändert nicht die Oberflächenstruktur oder Farbe der eingesetzten Mineralien. Jeder Farbton der natürlichen Mineralien ist möglich und es können fertige Flächen hergestellt werden, die anschließend nicht mehr gestrichen werden müssen. Nach erfolgtem Abbindeprozess bleibt das Bindemittel aus der Pflanze Physillium immer aktiv. Durch langanhaltende Wasserzufuhr kann der ausgehärtete Putz somit wieder plastifizieren und erhält dieselbe Verarbeitungsfähigkeit wie bei der erstmaligen Verarbeitung. Sofern Risse im Putz entstehen, können diese ohne zusätzliche Reparaturmittel auch von einem Laien ausgebessert werden.

Das Bindemittel aus der Pflanze Physillium ermöglicht es einen pH-neutralen Putz bzw. Mörtel herzustellen. Das Haftungsvermögen erstreckt sich auf sämtliche Untergründe und die Haftzugfestigkeit ist auf saugenden Untergründen sowie auf Holzuntergründen besonders gut. Schließlich hat der fertige Putz eine sehr gute Wasserdampfdurchlässigkeit, neigt aufgrund seiner Dauerelastizität nicht zur Bildung von Rissen und auch nicht zur Schimmelbildung.

## Patentansprüche

1. Putz bzw. Mörtel, beinhaltend mindestens eine Komponente eines Steinmehls sowie ein aus Bestandteilen der Pflanze Physillium hergestelltes Pflanzenmehl, **dadurch gekennzeichnet, dass** es sich bei dem Steinmehl um luftgetrocknetes Steinmehl handelt und das Pulver aus der Pflanze Physillium das Bindemittel für den Putz bildet.

2. Putz nach Anspruch 1, **dadurch gekennzeichnet, dass** er mindestens ein Konservierungsmittel, insbesondere Natriumchlorid und/oder Natriumbenzoat enthält.

3. Putz nach einem der voran stehenden Ansprüche, **dadurch gekennzeichnet, dass** das luftgetrocknete Steinmehl Kalksteinmehl mit einer Körnung zwischen 0,01 und 1,20 mm umfasst.

4. Putz nach einem der voran stehenden Ansprüche, **dadurch gekennzeichnet, dass** das luftgetrocknete Steinmehl hydroklassierten, getrockneten Quarzsand mit einer Körnung zwischen 0,10 und 0,80 mm umfasst.

5. Putz nach einem der voran stehenden Ansprüche, **dadurch gekennzeichnet, dass** das Physilliummehl Spelzenmehl mit einer Reinheit von 95 % und einem Ausmahlgrad von 80 Saiten pro Quadrat Inch umfasst.

6. Putz nach einem der voran stehenden Ansprüche, **dadurch gekennzeichnet, dass** das Physilliummehl Spelzen-Kornmehl mit einer Reinheit von 98 % und einem Ausmahlungsgrad von 80 Saiten pro Quadrat Inch umfasst.
